# EUROPEAN PATENT APPLICATION

(11) **EP 4 600 109 A1**
(43) Date of publication of application: **13.08.2025**
(21) Application number: 22964696.3
(22) Date of filing: 07.11.2022
(51) Int. Cl.: B61F 5/10, F16F 9/02, F16F 9/00

(54) **AIR CHAMBER, AIR SPRING, AIR SUSPENSION SYSTEM, AND VEHICLE**

(71) Applicant: Shenzhen Yinwang Intelligent Technologies Co., Ltd., Shenzhen, Guangdong 518129 (CN)
(72) Inventor: LIAO, Yongsheng, Shenzhen, Guangdong 518129 (CN); LI, Kun, Shenzhen, Guangdong 518129 (CN); CAO, Guoxiang, Shenzhen, Guangdong 518129 (CN); CHEN, Xiaohua, Shenzhen, Guangdong 518129 (CN)
(74) Representative: MERH-IP Matias Erny Reichl Hoffmann Patentanwälte PartG mbB
(86) International application number: PCT/CN2022/130420
(87) International publication number: WO 2024/098218

(57) **Abstract**

An air chamber, an air spring, an air suspension system, and a vehicle are provided. The air chamber is configured to communicate with a main cavity of the air spring (10). The air chamber includes a housing (21). The housing (21) has a first cavity (211), a plurality of second cavities (212), and a plurality of first breather holes (216). Each second cavity (212) communicates with the first cavity (211) through one first vent hole (216). The first cavity (211) is configured to communicate with the main cavity (31), and is configured to fit with a movable piece (22), so that N second cavities (212) communicate with the main cavity (31), where N is a natural number. The air chamber may enable the air spring to have a large quantity of stiffness levels, so that a contradiction between operation stability and comfort can be resolved, and costs of the air spring can be further reduced.

## Description

### TECHNICAL FIELD

This application relates to the field of mechanical and electronic technologies, and in particular, to an air chamber, an air spring, an air suspension system, and a vehicle.

### BACKGROUND

As an important actuator of an air suspension system, an air spring may provide basic operability and comfort for the air suspension system. One of most important parameters of the air spring is stiffness of the air spring. High stiffness is conducive to improving operation stability, but is not conducive to comfort. On the contrary, low stiffness is conducive to improving comfort, but is not conducive to operation stability. How to resolve a contradiction between operation stability and comfort through an air spring with proper stiffness is a problem to be resolved.

### SUMMARY

Embodiments of this application provide an air chamber, an air spring, an air suspension system, and a vehicle. The air chamber enables, by using one movable piece, different quantities of second cavities to communicate with a main cavity, so that the air spring can have a plurality of stiffness levels, a contradiction between operation stability and comfort can be resolved, and costs of the air spring can be further reduced.

A first aspect of embodiments of this application provides an air chamber. The air chamber is configured to communicate with a main cavity of an air spring, and the air chamber includes a housing. The housing has a first cavity, a plurality of second cavities, and a plurality of first vent holes. Each second cavity communicates with the first cavity through one first vent hole. The first cavity is configured to communicate with the main cavity, and is configured to fit with a movable piece, so that N second cavities in the plurality of second cavities communicate with the main cavity, where N is a natural number.

The air chamber provided in this embodiment of this application has the first cavity and the second cavity that communicate through the first vent hole. There are a plurality of second cavities, there are a plurality of first vent holes, and the plurality of first vent holes are in a one-to-one correspondence with the plurality of second cavities. When the air chamber is used, the movable piece may be movably mounted in the first cavity, and the movable piece may shield different quantities of first vent holes, so that different quantities of second cavities do not communicate with the main cavity through the first cavity. Therefore, a quantity of second cavities communicating with the main cavity can be controlled, and an effective volume of the air spring can be changed. Therefore, the first vent hole is shielded by the movable piece, to control the effective volume of the air spring, so that the air spring has a plurality of stiffness levels. A contradiction between operation stability and comfort can be resolved, and costs of the air spring can be reduced.

In a possible implementation, the plurality of second cavities are arranged in an extension direction of the first cavity. Through such arrangement, the air spring can have a plurality of stiffness levels, and a size in a direction perpendicular to the extension direction of the first cavity can be reduced, which helps increase an application scope of the air chamber.

In a possible implementation, the plurality of second cavities are arranged in a circumferential direction of the first cavity. Through such arrangement, the air spring can have a plurality of stiffness levels, and a size of the air chamber in an extension direction of the first cavity can be reduced. In other words, an axial size of the air chamber can be small, which helps improve an application scope of the air chamber.

In a possible implementation, the movable piece is movably mounted in the first cavity. Through such arrangement, in a process of moving in the first cavity, the movable piece can shield different quantities of first vent holes, so that the second cavity does not communicate with the first cavity, and different quantities of second cavities communicate with the main cavity.

In a possible implementation, the movable piece is slidably mounted in the first cavity. Through such arrangement, the movable piece can slide in the extension direction of the first cavity, and the quantity of second cavities communicating with the main cavity can be changed.

In a possible implementation, the movable piece is rotatably mounted in the first cavity. Through such arrangement, in a rotation process, the movable piece can shield different quantities of first vent holes, so that different quantities of second cavities communicate with the main cavity.

In a possible implementation, the apparatus further includes a driving piece. The driving piece is in a transmission connection to the movable piece, and the driving piece is configured to drive the movable piece to move in the first cavity, so that different quantities of second cavities can communicate with the main cavity.

In a possible implementation, the driving piece includes a lead screw and a motor. A part of the lead screw is located in the first cavity, and the movable piece is sleeved on the lead screw and fits with the lead screw through a screw thread. The motor is configured to drive the lead screw to rotate around an axis of the lead screw, so that the movable piece moves in the extension direction of the first cavity.

Through such arrangement, the motor drives the lead screw to rotate, and the lead screw drives the movable piece to move in the first cavity, so that different quantities of second cavities communicate with the main cavity.

In a possible implementation, the movable piece is cylindrical, and the lead screw and the movable piece are disposed eccentrically, so that the movable piece does not rotate in a process of moving in the extension direction of the first cavity.

Through such arrangement, simultaneous rotation of the movable piece and the lead screw can be avoided, so that the movable piece can move in a length direction of the lead screw, and different quantities of second cavities communicate with the main cavity.

In a possible implementation, the movable piece is cylindrical, a circle center of the movable piece is located on the rotation axis of the lead screw, a fitting portion is provided on the movable piece, and a limiting portion fitting with the fitting portion is provided on an inner wall of the first cavity, so that the movable piece does not rotate in a process of moving in the extension direction of the first cavity.

Through such arrangement, the limiting portion fits with the fitting portion, so that simultaneous rotation of the movable piece and the lead screw can be avoided, the movable piece can move in a length direction of the lead screw, and different quantities of second cavities communicate with the main cavity.

A second aspect of embodiments of this application provides an air spring, including a first air chamber and a second air chamber. The first air chamber is the air chamber according to any implementation of the first aspect. The second air chamber has a main cavity that communicates with a first cavity of the first air chamber.

The air spring provided in this embodiment of this application includes the first air chamber and the second air chamber. Because the first air chamber is the air chamber in the first aspect, through control of movement of the movable piece, different quantities of second cavities can be controlled to communicate with the main cavity, and a stiffness level range of the air spring can be increased. In addition, to increase stiffness by one level, only one second cavity and one first vent hole need to be added, and no movable piece needs to be added, so that costs of the air spring can be reduced.

In a possible implementation, a second cavity and the first cavity of the first air chamber are located in the main cavity.

Through such arrangement, the first air chamber is arranged in the second air chamber, so that mounting space required for arranging the air spring can be reduced, and compactness of the air spring can be further improved.

In a possible implementation, the first air chamber and the second air chamber are separately arranged, and the first cavity of the first air chamber communicates with the main cavity through an air pipe.

Through such arrangement, an effective volume of the main cavity can be increased, which helps increase an effective volume of the air spring.

In a possible implementation, the second air chamber includes bellows, an upper base, and a lower base, two opposite ends of the bellows are respectively fastened to the upper base and the lower base, and the bellows, the upper base, and the lower base jointly delimit the main cavity.

A third aspect of embodiments of this application provides an air suspension system, including an air supply apparatus and a plurality of air springs according to any implementation of the second aspect. The air supply apparatus is configured to transfer gas to the air springs.

In a possible implementation, the air supply apparatus includes a compressor assembly, an air reservoir, a valve assembly, and a controller. The controller is separately electrically connected to the compressor assembly and the valve assembly. The plurality of air springs are connected to the compressor assembly through the valve assembly, and the compressor assembly is connected to the air reservoir.

A fourth aspect of embodiments of this application provides a vehicle, including the air suspension system according to the third aspect.

### BRIEF DESCRIPTION OF DRAWINGS

FIG. 1 is a diagram of a vehicle according to this application;
FIG. 2 is a sectional view of an air spring according to an embodiment of this application;
FIG. 3 is a local sectional view of a first type of first air chamber according to the embodiment shown in FIG. 2;
FIG. 4 is a sectional view corresponding to a case in which no second cavity of the first air chamber according to the embodiment shown in FIG. 3 communicates with a main cavity;
FIG. 5 is a sectional view corresponding to a case in which all second cavities of the first air chamber according to the embodiment shown in FIG. 3 communicate with a main cavity;
FIG. 6 is a cross-sectional view of the first air chamber according to the embodiment shown in FIG. 3;
FIG. 7 is a cross-sectional view of a second type of first air chamber according to an embodiment of this application;
FIG. 8 is a local sectional view of a third type of first air chamber according to an embodiment of this application;
FIG. 9 is a cross-sectional view of a fourth type of first air chamber according to an embodiment of this application;
FIG. 10 is an expanded view of a first cavity according to the embodiment shown in FIG. 9;
FIG. 11 is a cross-sectional view of a fifth type of first air chamber according to an embodiment of this application;
FIG. 12 is a cross-sectional view of a sixth type of first air chamber according to an embodiment of this application;
FIG. 13 is a sectional view of a seventh type of first air chamber according to an embodiment of this application;
FIG. 14 is an expanded view of a movable piece according to the embodiment shown in FIG. 13;
FIG. 15 is an expanded view of a movable piece having third vent holes according to an embodiment of this application;
FIG. 16 is a sectional view of a movable piece having an air distribution groove according to an embodiment of this application;
FIG. 17 is an expanded view of the embodiment shown in FIG. 16; and
FIG. 18 is a sectional view of a second type of air spring according to an embodiment of this application.

### Reference numerals:

10: air spring;
20: first air chamber;
   21: housing;
      211: first cavity;
         2111: limiting portion;
      212: second cavity;
      213: inner housing;
      214: outer housing;
      215: separator;
      216: first vent hole;
      217: stop portion;
   22: movable piece;
      221: fitting portion;
      222: second vent hole;
      223: third vent hole;
      224: vent groove;
   23: driving piece;
      231: lead screw;
      232: motor;
      233: motor harness;
30: second air chamber;
   31: main cavity;
   32: bellows;
   33: upper base;
   34: lower base;
40: air pipe;
50: air supply apparatus;
   51: compressor assembly;
   52: air reservoir;
   53: valve assembly;
   54: controller;
60: vehicle.

### DESCRIPTION OF EMBODIMENTS

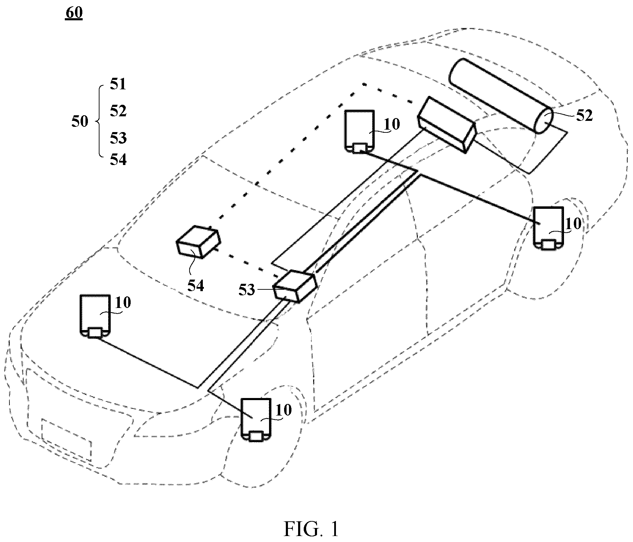

With development and progress of society, people have increasing requirements on travel, and impose higher requirements on driving and riding experience related to safety and comfort of a transportation means. Therefore, in recent years, more and more vehicles 60 use intelligent electric control components, such as an air suspension system. FIG. 1 is a diagram of a vehicle 60 according to this application. Refer to FIG. 1. A frame (or a load-bearing body) of the vehicle 60 may be connected to an axle (or wheels) of the vehicle 60 by using an air suspension system, so that a force and a torque that act between the wheels and the frame can be transferred, impact transferred from an uneven road surface to the frame or the body can be buffered, and resulting vibration can be reduced, so as to ensure that the vehicle 60 can travel smoothly.

In this application, still refer to FIG. 1. The air suspension system may include an air supply apparatus 50 and four air springs 10. The air supply apparatus 50 is configured to transfer gas to the air spring 10. In addition, in some embodiments, the air supply apparatus 50 may include a compressor assembly 51, an air reservoir 52, a valve assembly 53, and a controller 54. The controller 54 is separately electrically connected to the compressor assembly 51 and the valve assembly 53. The plurality of air springs 10 are connected to the compressor assembly 51 through the valve assembly 53, and the compressor assembly 51 is connected to the air reservoir 52. The controller 54 controls connection and disconnection between the valve assembly 53 and the compressor assembly 51, so that the gas in the air reservoir 52 can flow into each air spring 10, and stiffness of the air spring 10 is changeable.

It may be understood that the controller 54 may be a separately disposed control element, or may be a control element of the vehicle 60. This is not limited herein.

As an important actuator of the air suspension system, the air spring 10 provides basic operation stability and comfort for the air suspension system. One of most important parameters of the air spring 10 is the stiffness of the air spring 10. High stiffness is conducive to improving operation stability, but is not conducive to comfort. On the contrary, low stiffness is conducive to improving comfort, but is not conducive to operation stability. Therefore, an air spring 10 with real-time changeable stiffness can well resolve a contradiction between operation stability and comfort. In an operating condition, the stiffness of the air spring 10 is improved in a timely manner, that is, the air spring 10 becomes stiff, and operation stability is improved. In a non-operating condition, the stiffness of the air spring 10 is reduced to make the air spring 10 soft, so that vibration isolation performance is improved, that is, comfort is improved.

In a related technology, an air spring with real-time changeable stiffness includes a main air chamber, two auxiliary air chambers, and two electromagnetic switch valves. The two auxiliary air chambers are connected in series through one electromagnetic switch valve, and one of the auxiliary air chambers is connected to the main air chamber through the other electromagnetic switch valve. That is, the main air chamber and the two auxiliary air chambers are connected in series through the two electromagnetic switch valves. Electromagnetic switch valves at different positions are controlled to turn on or turn off, so that different quantities of auxiliary air chambers can be controlled to communicate with the main air chamber. In this way, an effective volume of the air spring can be controlled, and the stiffness of the air spring can be changed. A larger effective volume indicates lower stiffness, and a larger effective volume indicates higher stiffness. Because each electromagnetic switch valve corresponds to one auxiliary air chamber, the air spring in the related technology has three stiffness adjustment levels, which are as follows: One auxiliary air chamber communicates with the main air chamber, two auxiliary air chambers communicate with the main air chamber, and neither of the two auxiliary air chambers communicates with the main air chamber. However, there is a problem with this solution: To increase the stiffness of the air spring by one level, one auxiliary air chamber and one electromagnetic switch valve need to be added. Because costs of the electromagnetic switch valve are high, on a premise of considering costs and reliability of the air spring, a maximum of three-level stiffness adjustment is usually implemented. As a result, the air spring has a small quantity of stiffness levels, which cannot meet a use requirement of a user. Therefore, although the air spring in the related technology can resolve the contradiction between operation stability and comfort, a small quantity of stiffness levels can be provided, which cannot meet the use requirement of the user. In addition, the costs of the air spring are high.

In view of this, an embodiment of this application provides an air chamber. The air chamber includes a housing 21 and a movable piece 22. The housing 21 has one first cavity 211 and a plurality of second cavities 212. Each second cavity 212 communicates with the first cavity 211 through one first vent hole 216. The movable piece 22 is movably mounted in the first cavity 211. When moving in the first cavity 211, the movable piece 22 may shield different quantities of first vent holes 216, so that different quantities of second cavities 212 do not communicate with the first cavity 211. In this way, an effective volume of the air chamber can be changed. Therefore, when the air chamber is used as an auxiliary air chamber and the first cavity 211 communicates with a main air chamber, the movable piece 22 is controlled to shield different quantities of first vent holes 216. In this way, an effective volume of the air spring 10 can be changed, and stiffness of the air spring 10 can be changed, so that the air spring 10 can have a plurality of stiffness levels, and a contradiction between operation stability and comfort can be resolved. In addition, different quantities of second cavities 212 are controlled, through movement of one movable piece 22, to communicate with the main cavity 31. Regardless of the quantity of the second cavities 212, there is constantly one movable piece 22. Therefore, when the stiffness level of the air spring 10 is increased, costs of the air spring 10 are not greatly increased. In addition, the movable piece 22 fits with the first vent hole 216 in a mechanical manner, so that reliability of the air spring 10 can be improved.

It should be noted that, that the movable piece 22 shields the first vent hole 216 may also be understood as that the movable piece 22 blocks the first vent hole 216, so that some of the second cavities 212 do not communicate with the main air chamber through the first cavity 211. Shielding of the movable piece 22 may be indirect shielding or direct shielding. This is not limited herein, provided that some of the second cavities 212 do not communicate with the main air chamber through the first cavity 211.

The following describes, with reference to specific embodiments, an implementation of the air chamber provided in this embodiment of this application.

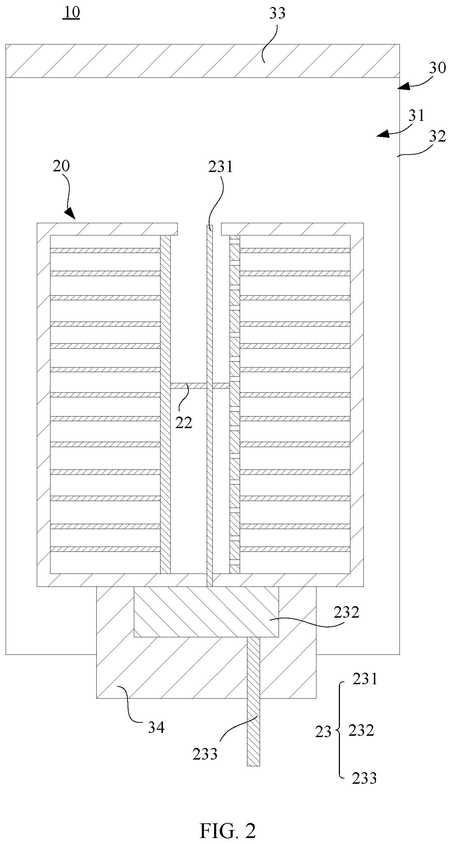

FIG. 2 is a sectional view of an air spring 10 according to an embodiment of this application. As shown in FIG. 2, the air spring 10 in this embodiment of this application may include a first air chamber 20 and a second air chamber 30. The second air chamber 30 has a main cavity 31. A part of the first air chamber 20 is arranged in the main cavity 31 of the second air chamber 30, so that mounting space required for arranging the air spring 10 can be reduced, and compactness of the air spring 10 can be further improved.

Still refer to FIG. 2. The second air chamber 30 may include bellows 32, an upper base 33, and a lower base 34. Two opposite ends of the bellows 32 are respectively fastened to the upper base 33 and the lower base 34, and the bellows 32, the upper base 33, and the lower base 34 jointly delimit the main cavity 31.

It should be noted that, in this embodiment of this application, the bellows 32 are made of an elastically deformable material and are configured to form a bladder-shaped second air chamber 30. A specific structure of the bellows 32 is not limited herein. For example, in some embodiments, the bellows 32 are a rubber bladder.

Specific shapes and structures of the upper base 33 and the lower base 34 are not limited herein. For example, the upper base 33 may be in a circular plate shape, and the lower base 34 may be cylindrical. Alternatively, in some embodiments, the lower base 34 may be in a shape of a circular truncated cone, and a small end face in a shape of a circular truncated cone is configured to form the main cavity 31, so that a volume of the main cavity 31 can be increased.

Still refer to FIG. 2. Because the part of the first air chamber 20 is located in the main cavity 31, the first air chamber 20 may be fastened and mounted on the lower base 34, to avoid shaking of the first air chamber 20 in the main cavity 31.

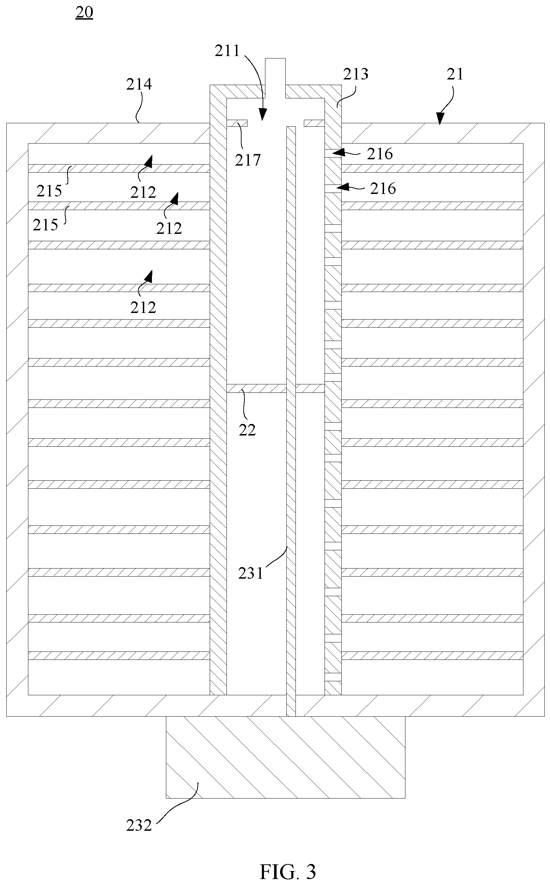

FIG. 3 is a local sectional view of the first type of first air chamber 20 according to the embodiment shown in FIG. 2. As shown in FIG. 3, the first air chamber 20 may include a housing 21, a movable piece 22, and a driving piece 23. The housing 21 has a first cavity 211, a plurality of second cavities 212, and a plurality of first vent holes 216. The first cavity 211 communicates with the main cavity 31. The plurality of second cavities 212 are arranged in an extension direction of the first cavity 211 (for example, the extension direction of the first cavity 211 in FIG. 3 is from top to bottom), and each second cavity 212 communicates with the first cavity 211 through one first vent hole 216. The movable piece 22 is slidably mounted in the first cavity 211 and is in a transmission connection to the driving piece 23. The driving piece 23 is configured to drive the movable piece 22 to move in the first cavity 211 in the extension direction of the first cavity 211, so that N second cavities 212 in the plurality of second cavities 212 communicate with the main cavity 31, where N is a natural number.

It may be understood that a quantity of stiffness levels of the air spring 10 depends on a quantity of the second cavities 212. For example, when the quantity of the second cavities 212 is 9, the air spring 10 has 10 stiffness levels.

The plurality of second cavities 212 are arranged in the extension direction of the first cavity 211. In other words, the plurality of second cavities 212 are stacked in the extension direction of the first cavity 211. Such arrangement helps reduce a size of the air spring 10 in a direction perpendicular to the extension direction of the first cavity 211, which helps increase an application scope of the air spring 10.

Refer to FIG. 3. When the movable piece 22 is located in the middle of the first cavity 211, a first vent hole 216 above the movable piece 22 may communicate with the main cavity 31 through an upper half part of the first cavity 211. Because a top of the first cavity 211 communicates with the main cavity 31, a second cavity 212 above the movable piece 22 can communicate with the main cavity 31. A first vent hole 216 below the movable piece 22 communicates with a lower half part of the first cavity 211. However, because the movable piece 22 divides the first cavity 211 into two parts, a second cavity 212 below the movable piece 22 cannot communicate with the upper half part of the first cavity 211. Therefore, the second cavity 212 below the movable piece 22 does not communicate with the main cavity 31.

Therefore, when the movable piece 22 moves up and down in the extension direction of the first cavity 211, stiffness adjustment of the air spring 10 can be implemented. A specific principle is as follows: When the movable piece 22 moves upward, a quantity of second cavities 212 that communicate with the lower half part of the first cavity 211 and are isolated from the main cavity 31 increases, and an equivalent volume of the air spring 10 decreases, so that stiffness of the air spring 10 increases. When the movable piece 22 moves downward, a quantity of second cavities 212 that communicate with the lower half part of the first cavity 211 and are isolated from the main cavity 31 decreases, and an equivalent volume of the air spring 10 increases, so that stiffness of the air spring 10 decreases.

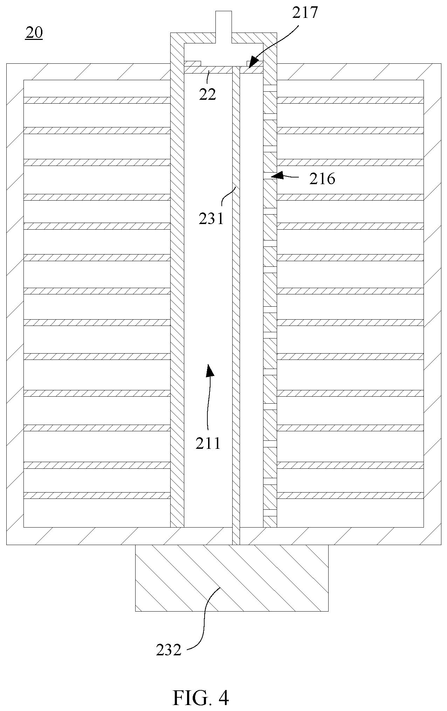

FIG. 4 is a sectional view corresponding to a case in which no second cavity 212 of the first air chamber 20 according to the embodiment shown in FIG. 3 communicates with the main cavity 31. As shown in FIG. 4, when the movable piece 22 moves to a highest position, all the second cavities 212 are isolated from the main cavity 31, the equivalent volume of the air spring 10 is the smallest, and maximum stiffness is implemented.

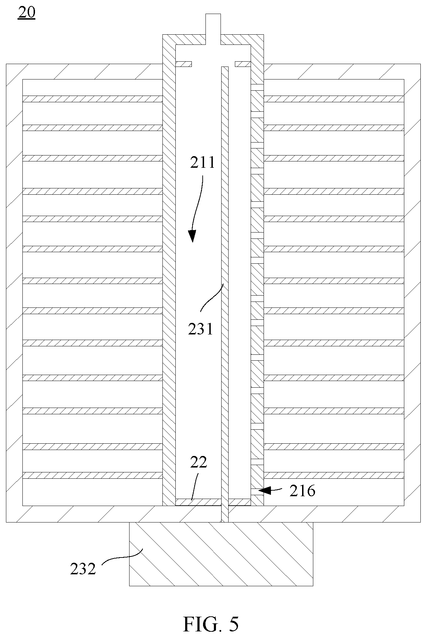

FIG. 5 is a sectional view corresponding to a case in which all the second cavities 212 of the first air chamber 20 according to the embodiment shown in FIG. 3 communicate with the main cavity 31. As shown in FIG. 5, when the movable piece 22 moves to a lowest position, all the second cavities 212 communicate with the main cavity 31, the equivalent volume of the air spring 10 is the largest, and minimum stiffness is implemented.

It should be noted that, when the movable piece 22 divides the first cavity 211 into the upper part and the lower part, the upper part and the lower part of the first cavity 211 are not completely isolated, and a gap through which the upper part and the lower part of the first cavity 211 communicate still exists between the movable piece 22 and the first cavity 211. However, the gap is excessively small, and an amount of gas passing through the gap is excessively small. In addition, that the amount of gas passing through the gap is less than an amount of gas passing through the first vent hole 216 does not affect each stiffness level of the air spring 10, in other words, does not affect normal use of the air spring 10.

Still refer to FIG. 3 and FIG. 5. A stop portion 217 is provided in the first cavity 211. When the movable piece 22 moves to the highest position, the movable piece 22 presses against the stop portion 217, so that detachment of the stop portion 217 from the first cavity 211 can be avoided, and it can be ensured that all the second cavities 212 are isolated from the main cavity 31.

A specific shape of the stop portion 217 is not limited herein. For example, refer to FIG. 3. The stop portion 217 may be of a circular ring structure. Alternatively, in some embodiments, the stop portion 217 may include at least two limiting sections, and the at least two limiting sections are spaced apart in the circumferential direction of the first cavity 211.

In some embodiments, the stop portion 217 may alternatively be a part of an inner wall of the first cavity 211. For example, in some embodiments, the stop portion 217 is a step surface (not shown in the figure) that is to be pressed against and that is delimited by the inner wall of the first cavity 211.

Refer to FIG. 2. The housing 21 may be fastened to the lower base 34, so that the first air chamber 20 can be firmly arranged in the main cavity 31. In addition, a specific shape of the housing 21 is not specifically limited herein. For example, refer to FIG. 2 and FIG. 3. The housing 21 may include an inner housing 213, an outer housing 214, and a plurality of separators 215. An inner wall of the inner housing 213 delimits the first cavity 211 that is configured to communicate with the main cavity 31, and the plurality of first vent holes 216 are spaced apart on the inner housing 213 in the extension direction of the first cavity 211. The outer housing 214 is sleeved on an outer wall of the inner housing 213 and is fastened to the inner housing 213. The separator 215 is disposed between the outer wall of the inner housing 213 and an inner wall of the outer housing 214, and the plurality of separators 215 are spaced apart in the extension direction of the first cavity 211. The plurality of separators 215, the outer wall of the inner housing 213, and the inner wall of the outer housing 214 jointly delimit the plurality of second cavities 212 stacked in the extension direction of the first cavity 211.

It should be noted that a material of the separator 215 may be a metal material or a non-metal material. This is not limited herein. A material of the inner housing 213 may also be a metal material or a non-metal material. This is not limited herein. A material of the outer housing 214 may also be a metal material or a non-metal material. This is not limited herein.

In some possible implementations, as shown in FIG. 2 and FIG. 3, the driving piece 23 may include a lead screw 231 and a motor 232. A part of the lead screw 231 is located in the first cavity 211, and the movable piece 22 is sleeved on the lead screw 231 and fits with the lead screw 231 through a screw thread. The motor 232 is configured to drive the lead screw 231 to rotate around an axis of the lead screw 231, so that the movable piece 22 slides in the first cavity 211 in the extension direction of the first cavity 211, and different quantities of second cavities 212 can communicate with the main cavity 31.

Still refer to FIG. 2. Because both the motor 232 and the lead screw 231 are located in the main cavity 31, to control rotation of the motor 232, a through hole for a motor harness 233 to pass through is provided on the lower base 34, and the motor harness 233 is configured to electrically connect the motor 232 to a controller 54.

Still refer to FIG. 2. An accommodation groove for insertion of the motor 232 is provided on the lower base 34, so that axial stiffness of the air spring 10 can be reduced. In addition, the motor 232 may be fastened to the lower base 34, or the motor 232 is fastened to the housing 21. This is not specifically limited herein.

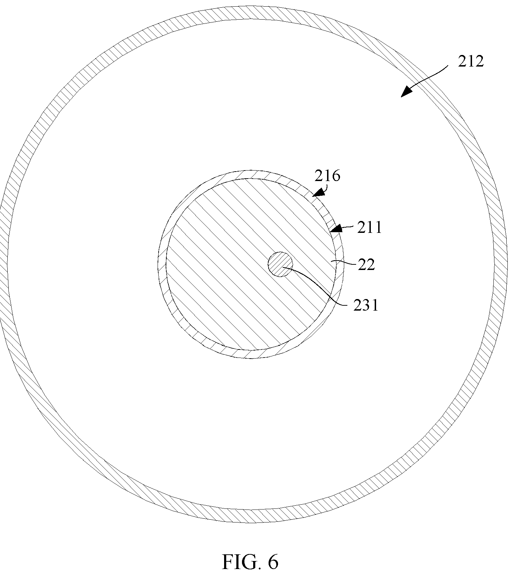

FIG. 6 is a cross-sectional view of the first air chamber 20 according to the embodiment shown in FIG. 3. In some possible implementations, as shown in FIG. 3 and FIG. 6, the movable piece 22 is cylindrical, and the lead screw 231 and the movable piece 22 are disposed eccentrically, so that simultaneous rotation of the movable piece 22 and the lead screw 231 can be avoided. In this way, the movable piece 22 does not rotate in a process of moving in the extension direction of the first cavity 211, the movable piece 22 moves up and down in a length direction of the lead screw 231, and different quantities of second cavities 212 communicate with the main cavity 31.

It can be understood that being disposed eccentrically means that the rotation axis of the lead screw 231 does not overlap a circle center of the movable piece 22. Therefore, in a radial direction of the movable piece 22, the movable piece 22 presses against the inner wall of the first cavity 211, so that the movable piece 22 can slide up and down in the first cavity 211.

Refer to FIG. 6. It should be noted that, because the movable piece 22 is cylindrical, and correspondingly, a cross section of the first cavity 211 is also circular, a shape of the cross section of the first cavity 211 fits with a shape of the movable piece 22.

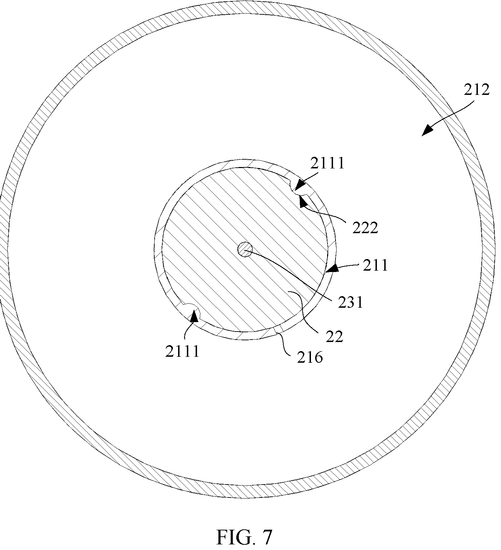

When the movable piece 22 is cylindrical, in addition to disposing the lead screw 231 and the movable piece 22 eccentrically to ensure that the movable piece 22 moves up and down, FIG. 7 is a cross-sectional view of a second type of first air chamber 20 according to an embodiment of this application. In some possible implementations, a difference between FIG. 7 and FIG. 6 lies in that, the circle center of the movable piece 22 is located on the rotation axis of the lead screw 231, a fitting portion 221 is provided on the movable piece 22, and a limiting portion 2111 fitting with the fitting portion 221 is provided on the inner wall of the first cavity 211. The limiting portion 2111 fits with the fitting portion 221, so that simultaneous rotation of the movable piece 22 and the lead screw 231 can be avoided, the movable piece 22 can move in the length direction of the lead screw 231, and different quantities of second cavities 212 communicate with the main cavity 31.

Still refer to FIG. 7. The fitting portion 221 may be a fitting groove for insertion of the limiting portion 2111. Certainly, in some embodiments, the limiting portion 2111 may also be a fitting groove for insertion of the fitting portion 221.

A quantity of limiting portions 2111 is the same as a quantity of fitting portions 221. In addition, there is at least one limiting portion 2111. This is not limited herein. For example, as shown in FIG. 7, there are two limiting portions 2111, and the two limiting portions 2111 are symmetrically provided with respect to the lead screw 231.

In addition to being cylindrical, in some possible implementations, the movable piece 22 may alternatively be a polygonal plate. For example, the movable piece 22 may be a polygonal plate such as a trilateral, a quadrilateral, or a pentagonal plate. Because the cross section of the first cavity 211 fits with the movable piece 22, when the movable piece 22 moves up and down along the lead screw 231, in a radial direction of the lead screw 231, the movable piece 22 constantly presses against the inner wall of the first cavity 211, so that simultaneous rotation of the movable piece 22 and the lead screw 231 is avoided.

In this embodiment of this application, a specific shape of a cross section of the second cavity 212 is not limited. For example, as shown in FIG. 7, when the shape of the cross section of the first cavity 211 is a circle, the cross section of the second cavity 212 may be a circular ring; or in some embodiments, when the shape of the cross section of the first cavity 211 is a circle, the specific shape of the cross section of the second cavity 212 may alternatively be an ellipse. It can be learned that the shape of the cross section of the second cavity 212 may be a ring structure sleeved outside the first cavity 211. Certainly, the shape of the cross section of the second cavity 212 may alternatively not be sleeved outside the first cavity 211.

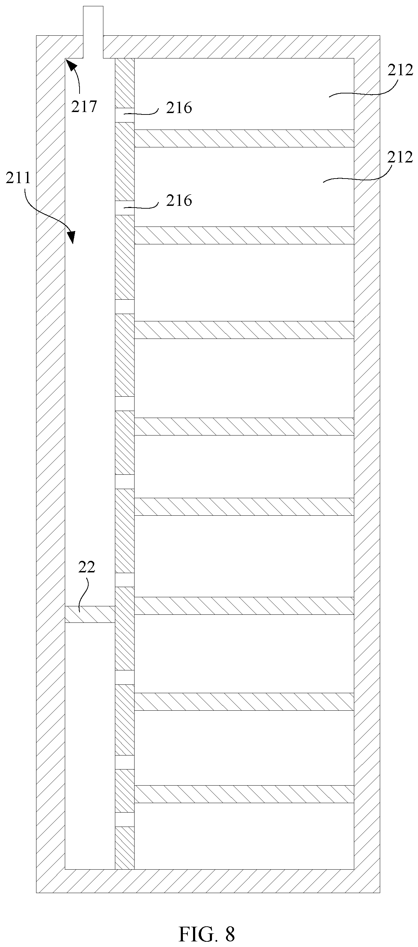

FIG. 8 is a local sectional view of a third type of first air chamber 20 according to an embodiment of this application. A difference between FIG. 8 and FIG. 7 lies in that the cross section of the second cavity 212 is not set around the first cavity 211, and the first cavity 211 and the second cavity 212 are disposed abreast in the direction perpendicular to the extension direction of the first cavity 211. In addition, the shape of the cross section of the second cavity 212 may be a shape such as a sector ring or a polygon. This is not limited herein.

Still refer to FIG. 8. The first cavity 211 is also provided with the stop portion 217. The stop portion 217 is a part of the inner wall of the first cavity 211, and the stop portion 217 is a step surface provided on the top of the first cavity 211. In this way, it can be ensured that the movable piece 22 moves to the highest position, so that all the second cavities 212 do not communicate with the main cavity 31.

In the foregoing content, the plurality of second cavities 212 are stacked in the extension direction of the first cavity 211. However, the plurality of second cavities 212 may alternatively be arranged in the circumferential direction of the first cavity 211. Through such arrangement, a size of the first air chamber 20 in the extension direction of the first cavity 211 can be reduced. Therefore, an axial size of the first air chamber 20 can be small, which helps improve an application scope of the air spring 10.

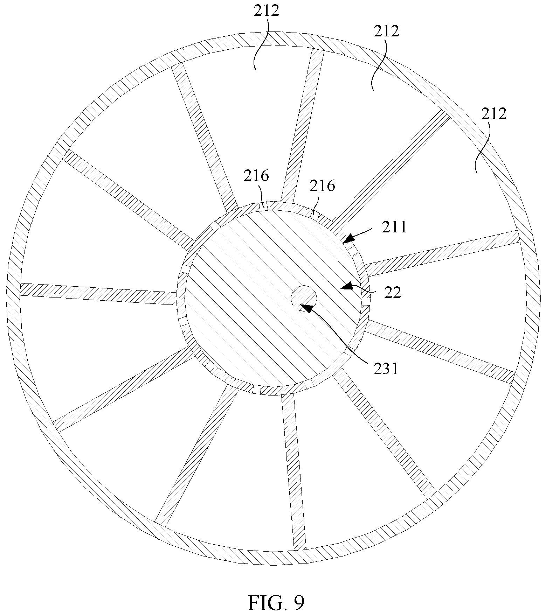

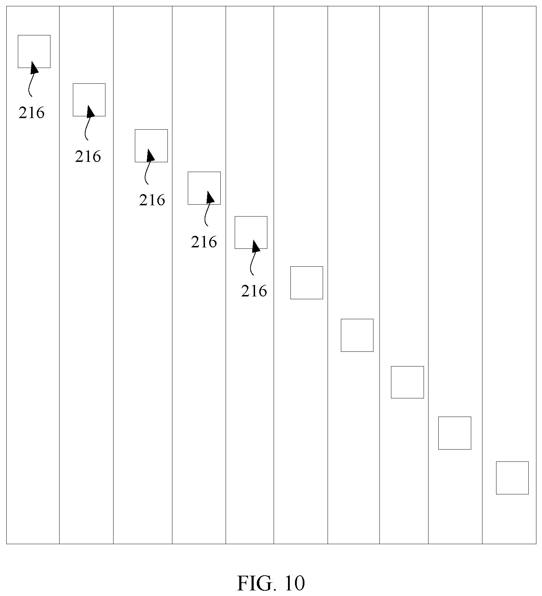

FIG. 9 is a cross-sectional view of a fourth type of first air chamber 20 according to an embodiment of this application. FIG. 10 is an expanded view of a first cavity 211 according to the embodiment shown in FIG. 9. A difference between FIG. 9 and FIG. 3 lies in that the plurality of second cavities 212 are arranged in the circumferential direction of the first cavity 211, the plurality of first vent holes 216 are spaced apart in the circumferential direction of the first cavity 211, and the plurality of first vent holes 216 are spaced apart in the extension direction of the first cavity 211 (for example, as shown in FIG. 10). Under an action of the driving piece 23, the movable piece 22 slides up and down in the first cavity 211, so that some of the first vent holes 216 are located above the movable piece 22, and some of the first vent holes 216 are located below the movable piece 22. In this way, different quantities of second cavities 212 can communicate with the main cavity 31.

Still refer to FIG. 9. Because the movable piece 22 is cylindrical and driven by the lead screw 231, to enable the movable piece 22 to slide up and down in the first cavity 211, the lead screw 231 and the movable piece 22 are disposed eccentrically.

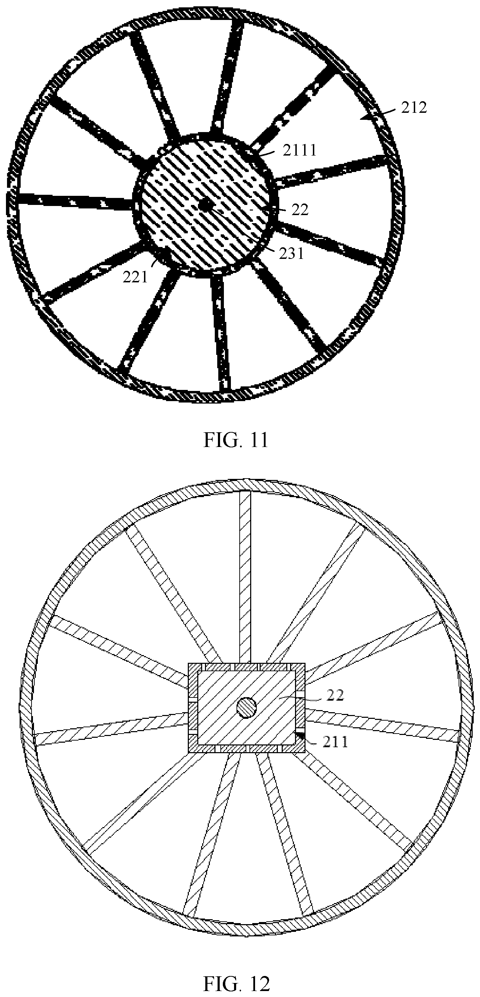

When the movable piece 22 is cylindrical, in addition to disposing the lead screw 231 and the movable piece 22 eccentrically, the limiting portion 2111 and the fitting portion 221 in the foregoing content may alternatively be used to avoid simultaneous rotation of the movable piece 22 and the lead screw 231, as shown in FIG. 11. FIG. 11 is a cross-sectional view of a fifth type of first air chamber 20 according to an embodiment of this application. A difference between FIG. 11 and FIG. 9 lies in that, a circle of the cylindrical movable piece 22 is located on the rotation axis of the lead screw 231, the fitting portion 221 is provided on the movable piece 22, and the limiting portion 2111 is provided on the inner wall of the first cavity 211. Because specific structures of the limiting portion 2111 and the fitting portion 221 have been described in the foregoing content, details are not described herein again.

Certainly, the movable piece 22 may alternatively be a polygon. Regardless of where the lead screw 231 is located in the movable piece 22, the movable piece 22 slides up and down in the first cavity 211, as shown in FIG. 12. FIG. 12 is a cross-sectional view of a sixth type of first air chamber 20 according to an embodiment of this application. A difference between FIG. 12 and FIG. 9 lies in that the movable piece 22 is a rectangle, and correspondingly, the shape of the cross section of the first cavity 211 is a rectangular ring structure.

In the foregoing content, the movable piece 22 moves in the first cavity 211 in a sliding manner, so that different quantities of second cavities 212 communicate with the main cavity 31. However, the movable piece 22 may alternatively move in the first cavity 211 in a rotating manner, so that different quantities of second cavities 212 communicate with the main cavity 31.

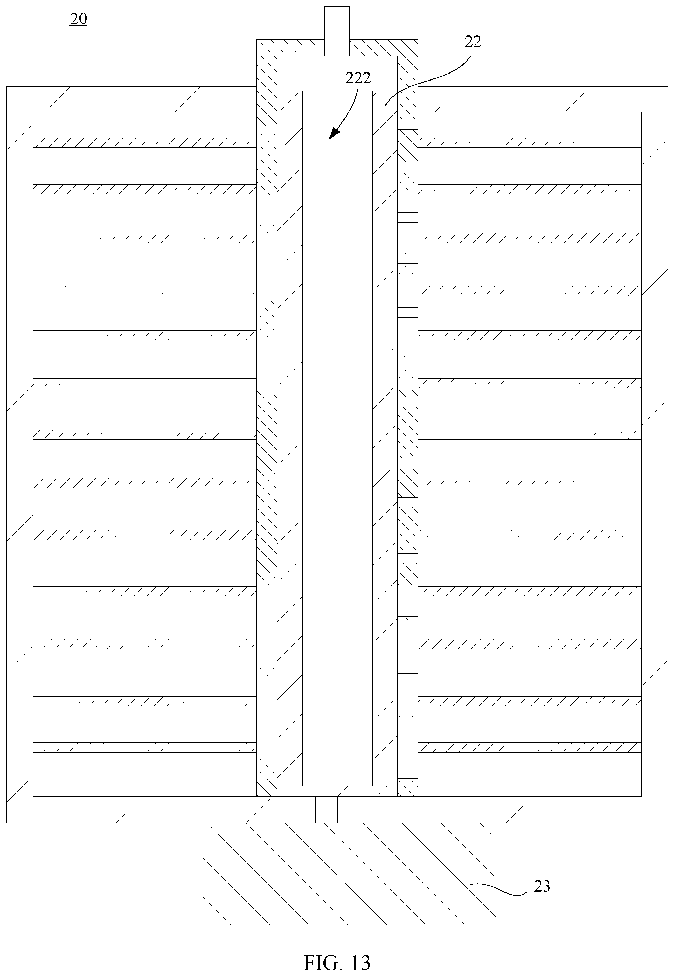

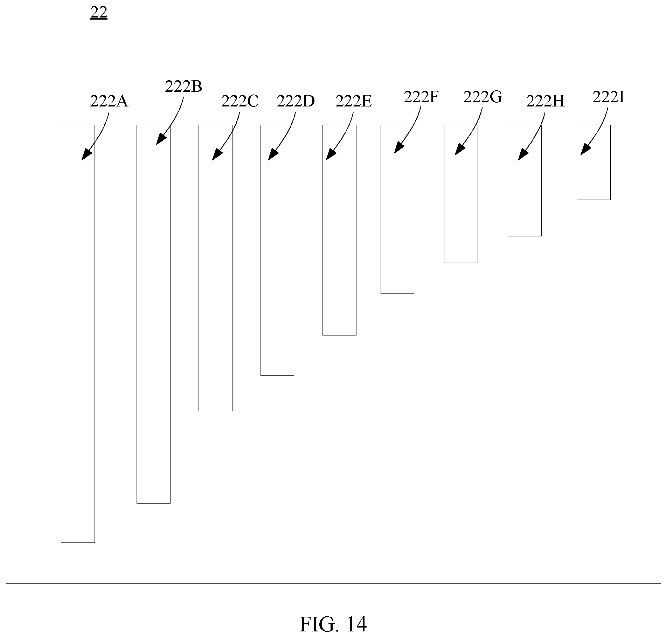

FIG. 13 is a sectional view of a seventh type of first air chamber 20 according to an embodiment of this application. FIG. 14 is an expanded view of a movable piece 22 according to the embodiment shown in FIG. 13. A difference between FIG. 13 and FIG. 3 lies in that, the movable piece 22 is of a barrel-shaped structure, an opening end of the movable piece 22 communicates with the first cavity 211, a plurality of second vent holes 222 spaced apart in a circumferential direction of the movable piece 22 are provided on the movable piece 22, each second vent hole 222 extends in an extension direction of the movable piece 22, and lengths of the second vent holes 222 are different (as shown in FIG. 14). The movable piece 22 is in a transmission connection to the driving piece 23, and the driving piece 23 drives the movable piece 22 to rotate in the first cavity 211.

Refer to FIG. 13 and FIG. 14. After the driving piece 23 drives the movable piece 22 to rotate by a preset angle, second vent holes 222 at different positions of the movable piece 22 communicate with different quantities of first vent holes 216, so that different quantities of second cavities 212 communicate with the first cavity 211 through the movable piece 22, and the different quantities of second cavities 212 communicate with the main cavity 31. After a second vent hole 222 with a longest length (for example, a second vent hole 222A in FIG. 14) in the second vent holes 222 communicates with all the first vent holes 216, the equivalent volume of the air spring 10 is the largest, and the minimum stiffness is implemented. When no second vent hole 222 communicates with the first vent hole 216, the equivalent volume of the air spring 10 is the smallest, and the maximum stiffness is implemented.

Essence of controlling, by rotating the movable piece 22, a quantity of second cavities 212 communicating with the main cavity 31 is also to shield different quantities of first vent holes 216 by using the movable piece 22, so that different quantities of second cavities 212 do not communicate with the inside of the movable piece 22, and the different quantities of second cavity 212 do not communicate with the first cavity 211.

It may be understood that a difference between quantities of first vent holes 216 corresponding to the second vent holes 222 is 1, so that each second cavity 212 corresponds to one stiffness level.

The driving piece 23 may be the motor 232, and an output shaft of the motor 232 is in a transmission connection to the movable piece 22, so that the movable piece 22 can rotate in the first cavity 211.

It should be noted that, in addition to the barrel-shaped structure, in some embodiments, the movable piece 22 may alternatively be of a tubular structure.

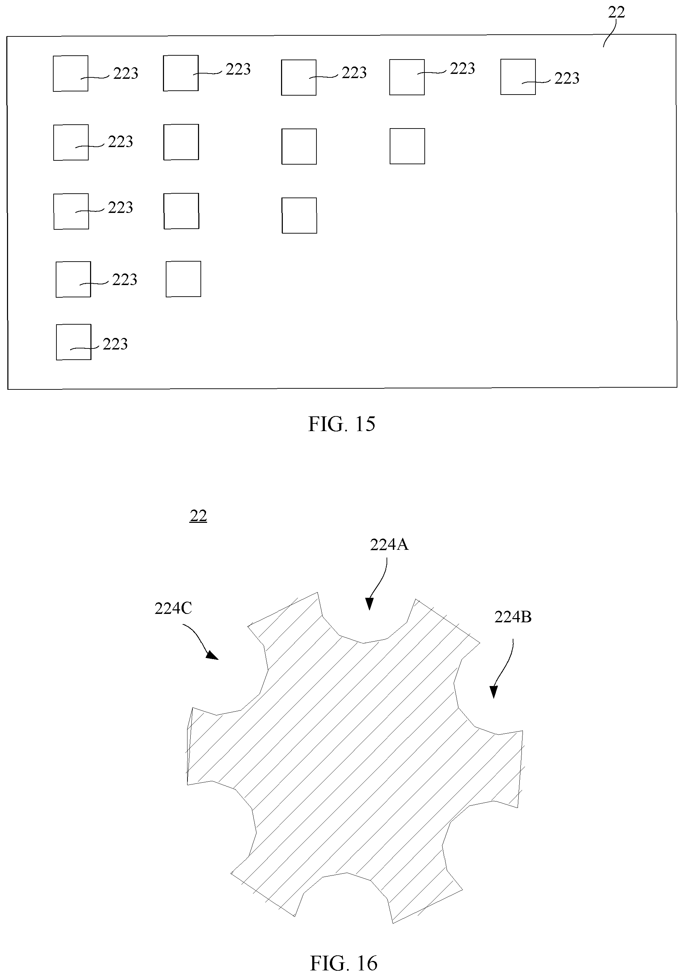

In addition to the second vent holes 222 extending in the extension direction of the movable piece 22, in some embodiments, each second vent hole 222 in FIG. 14 may be replaced with a different quantity of third vent holes 223, so that one first vent hole 216 communicates with one third vent hole 223, and different quantities of second cavities 212 communicate with the inside of the movable piece 22 through different quantities of third vent holes 223, as shown in FIG. 15. FIG. 15 is an expanded view of a movable piece 22 having third vent holes 223 according to an embodiment of this application.

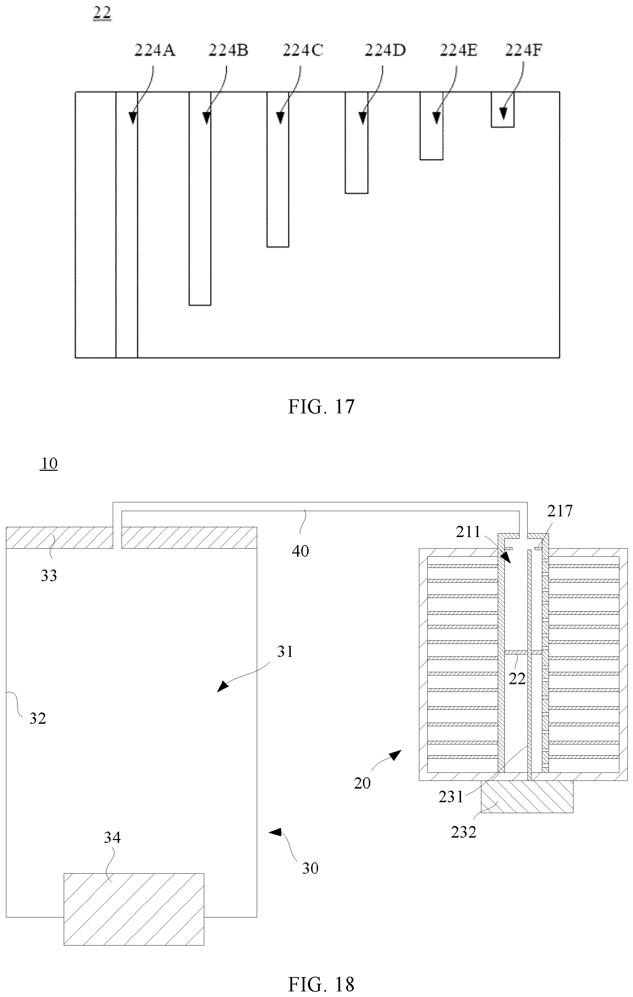

FIG. 16 is a sectional view of a movable piece 22 having an air distribution according to an embodiment of this application. FIG. 17 is an expanded view of the embodiment shown in FIG. 16. In addition to implementing communication between the first cavity 211 and different quantities of second cavities 212 through the inside of the movable piece 22, in some embodiments, as shown in FIG. 16 and FIG. 17, the movable piece 22 in FIG. 13 may alternatively be replaced with the cylindrical movable piece 22. A plurality of vent grooves 224 are provided on a side wall of the movable piece 22. Each vent groove 224 extends in the extension direction of the movable piece 22, and lengths of the vent grooves 224 are different. The plurality of vent grooves 224 are spaced apart in the circumferential direction of the movable piece 22. The movable piece 22 is rotated, so that vent grooves 224 of different lengths communicate with different quantities of first vent holes 216. In this way, the second cavity 212 communicates with the first cavity 211 through the vent grooves 224, and different quantities of second cavity 212 can communicate with the main cavity 31.

In the foregoing content, the first cavity 211 and the second cavity 212 of the first air chamber 20 are arranged in the main cavity 31. In other words, it may be almost considered that the first air chamber 20 is arranged in the main cavity 31. However, the first air chamber 20 and the second air chamber 30 may alternatively be separately arranged. FIG. 18 is a sectional view of a second type of air spring 10 according to an embodiment of this application. A difference between FIG. 18 and FIG. 3 lies in that, the first cavity 211 and the second cavity 212 of the first air chamber 20 are located outside the main cavity 31, and the first cavity 211 of the first air chamber 20 may communicate with the main cavity 31 through an air pipe 40.

When the first air chamber 20 and the second air chamber 30 are separately arranged, a structure of the first air chamber 20 may be that of the first air chamber 20 (for example, the first air chamber 20 in FIG. 3 to FIG. 17) in the foregoing content. Therefore, the structure of the first air chamber 20 is not described in detail herein.

When the first air chamber 20 and the second air chamber 30 are separately arranged, and the movable piece 22 slides in the first cavity 211, a structure of the driving piece 23 is not limited to a combination of the lead screw 231 and the motor 232, and the driving piece 23 may alternatively be a linear driving element such as a linear motor, an air cylinder, or a hydraulic cylinder.

It should be noted that, refer to FIG. 18. An opening that is on the upper base 33 and that communicates with the air pipe 40 is provided on a top wall of the upper base 33. However, in some embodiments, the opening communicating with the air pipe 40 may alternatively be provided on a side wall of the upper base 33.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An air chamber, wherein the air chamber is configured to communicate with a main cavity of an air spring, and the air chamber comprises a housing;
the housing has a first cavity, a plurality of second cavities, and a plurality of first vent holes;
each second cavity communicates with the first cavity through one first vent hole; and
the first cavity is configured to communicate with the main cavity, and is configured to fit with a movable piece, so that N second cavities in the plurality of second cavities communicate with the main cavity, wherein N is a natural number.

2. The air chamber according to claim 1, wherein the plurality of second cavities are arranged in an extension direction of the first cavity.

3. The air chamber according to claim 1, wherein the plurality of second cavities are arranged in a circumferential direction of the first cavity.

4. The air chamber according to any one of claims 1 to 3, wherein the movable piece is movably mounted in the first cavity.

5. The air chamber according to claim 4, wherein the movable piece is slidably mounted in the first cavity.

6. The air chamber according to claim 4, wherein the movable piece is rotatably mounted in the first cavity.

7. The air chamber according to any one of claims 4 to 6, further comprising a driving piece, wherein the driving piece is in a transmission connection to the movable piece, and the driving piece is configured to drive the movable piece to move in the first cavity.

8. The air chamber according to claim 7, wherein the driving piece comprises a lead screw and a motor; a part of the lead screw is located in the first cavity, and the movable piece is sleeved on the lead screw and fits with the lead screw through a screw thread; and the motor is configured to drive the lead screw to rotate around an axis of the lead screw, so that the movable piece moves in the extension direction of the first cavity.

9. The air chamber according to claim 8, wherein the movable piece is cylindrical, and the lead screw and the movable piece are disposed eccentrically, so that the movable piece does not rotate in a process of moving in the extension direction of the first cavity.

10. The air chamber according to claim 8, wherein the movable piece is cylindrical, a circle center of the movable piece is located on the rotation axis of the lead screw, a fitting portion is provided on the movable piece, and a limiting portion fitting with the fitting portion is provided on an inner wall of the first cavity, so that the movable piece does not rotate in a process of moving in the extension direction of the first cavity.

11. An air spring, comprising a first air chamber and a second air chamber, wherein the first air chamber is the air chamber according to any one of claims 1 to 10, and the second air chamber has a main cavity that communicates with a first cavity of the first air chamber.

12. The air spring according to claim 11, wherein a second cavity and the first cavity of the first air chamber are located in the main cavity.

13. The air spring according to claim 11, wherein the first air chamber and the second air chamber are separately arranged, and the first cavity of the first air chamber communicates with the main cavity through an air pipe.

14. The air spring according to any one of claims 11 to 13, wherein the second air chamber comprises bellows, an upper base, and a lower base, two opposite ends of the bellows are respectively fastened to the upper base and the lower base, and the bellows, the upper base, and the lower base jointly delimit the main cavity.

15. An air suspension system, comprising an air supply apparatus and a plurality of air springs according to any one of claims 11 to 14, wherein the air supply apparatus is configured to transfer gas to the air springs.

16. A vehicle, comprising the air suspension system according to claim 15.
